# EUROPEAN PATENT APPLICATION

(11) **EP 4 570 607 A1**
(43) Date of publication of application: **18.06.2025**
(21) Application number: 23215741.2
(22) Date of filing: 12.12.2023
(51) Int. Cl.: B60W 20/16, B60K 6/48, B60W 10/06, B60W 10/08, B60W 20/10, B60W 20/11, B60K 6/485

(54) **A COMPUTER SYSTEM FOR CONTROLLING A KINETIC ENERGY RECOVERY SYSTEM**

(71) Applicant: VOLVO TRUCK CORPORATION, 405 08 Göteborg (SE)
(72) Inventor: CHAVRIER, Philemon, 69008 LYON (FR); MAZAUFROY, Cedric, 69740 GENAS (FR); POUSSIN, Olivier, 69008 LYON (FR); PESENTI, Sebastien, 69800 ST PRIEST (FR)
(74) Representative: Kransell & Wennborg KB

(57) **Abstract**

The present invention relates to a computer system comprising processing circuitry configured to receive data indicative of a temperature parameter of an engine aftertreatment system positioned in downstream fluid communication with an internal combustion engine of a vehicle, and in response to the temperature parameter of the engine aftertreatment system falling outside a predetermined range control a kinetic energy recovery system connected to a propeller shaft connected to the internal combustion engine to generate power from kinetic energy of the propeller shaft in response to the temperature parameter falling below the predetermined range; or control the kinetic energy recovery system to apply a propulsion torque to the propeller shaft in response to the temperature parameter exceeding the predetermined range.

## Description

### TECHNICAL FIELD

The disclosure relates generally to vehicle propulsion systems. In particular aspects, the disclosure relates to a computer system for controlling a kinetic energy recovery system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Aftertreatment of exhaust emissions from internal combustion engines is preferably implemented downstream the internal combustion engine to reduce the emission of environmentally harmful gases to the ambient environment outside the vehicle. Conventionally, a reducing agent is injected to the combustion gases exhausted from the internal combustion engine before the exhaust gases reach a catalytic converter.

However, the aftertreatment systems are sensitive to temperature variations to efficiently reduce the substances of pollutants and harmful exhaust gases being exhausted to the ambient environment. Too low temperature of the aftertreatment system may increase the risk of a diesel particulate filter, arranged in the exhaust line, being clogged as well as to reduce the efficiency of the aftertreatment system. A too high temperature level increases the risk of NOx and other environmentally harmful particles being released to the ambient environment, as well as increasing the risk of hardware malfunctions of the aftertreatment system.

There is thus a desire to improve the control of the temperature level of an aftertreatment system.

### SUMMARY

According to a first aspect of the disclosure, there is provided a computer system comprising processing circuitry configured to receive data indicative of a temperature parameter of an engine aftertreatment system positioned in downstream fluid communication with an internal combustion engine of a vehicle, and in response to the temperature parameter of the engine aftertreatment system falling outside a predetermined range, control a kinetic energy recovery system connected to a propeller shaft connected to the internal combustion engine to generate power from kinetic energy of the propeller shaft in response to the temperature parameter falling below the predetermined range; or control the kinetic energy recovery system to apply a propulsion torque to the propeller shaft in response to the temperature parameter exceeding the predetermined range.

The first aspect of the disclosure may seek to mitigate the problem of an engine aftertreatment system operating outside a preferred temperature range. A technical benefit may include that the temperature of the engine aftertreatment system can be controlled, using the kinetic energy recovery system, to fall within the predetermined range, whereby the engine aftertreatment system can be operated at beneficial temperatures to reduce a level of exhausted pollutants, such as e.g., NOx gas. Operating the engine aftertreatment system within the predetermined range will also positively affect system components of the engine aftertreatment system, such as e.g., a diesel particulate filter, which could otherwise be clogged or exposed to hardware malfunctions when exposed to too low temperatures.

As will be evident below, the temperature parameter should be construed as both relating to the actual, current temperature of the engine aftertreatment system, as well as to a temperature increase rate or temperature decrease rate. Thus, the kinetic energy recovery system can be controlled to generate power from kinetic energy of the propeller shaft in response to the temperature decrease rate being lower than a predetermined range in the form of a decrease rate range. If the temperature increase rate falls below such predetermined range, there may be a risk that the temperature of the engine aftertreatment system will soon be too low, even if the current temperature level is within a predetermined threshold range in the form of a temperature range. In a similar vein, the kinetic energy recovery system may be controlled to apply a propulsion torque to the propeller shaft in response to a temperature increase range exceeding a predetermined range in the form of an increase rate range. If the temperature increase rate exceeds such predetermined range, there may be a risk that the temperature of the engine aftertreatment system will soon be too high, even if the current temperature level is within the predetermined threshold range in the form of a temperature range.

The kinetic energy recovery system, also referred to as a KERS, is connected to the propeller shaft and can be operable to recover and store kinetic energy, i.e., the KERS generates power from kinetic energy of the propeller shaft. When the KERS generates power from kinetic energy of the propeller shaft, an additional inertia is applied to the propeller shaft. When a torque is requested by, e.g., an operator or an autonomously controlled vehicle system, the internal combustion engine must provide an increased torque if the KERS contemporaneously generates power from kinetic energy of the propeller shaft to meet such overall torque demand. The increased torque from the internal combustion engine will generate exhaust gas with an increased temperature level which in turn will heat, i.e. increase, the temperature level of the engine aftertreatment system. The recovered energy by the KERS can be used to apply a propulsion torque to the propeller shaft, i.e., the stored energy is released back to the propeller shaft to assist the internal combustion engine. Hence, when the KERS applies a torque to the propeller shaft, it assists the internal combustion which in turn can apply a reduced torque on the propeller shaft such that the overall torque request is met. The reduced torque from the internal combustion engine will generate exhaust gas with a reduced temperature level which in turn will reduce the temperature level of the engine aftertreatment system.

A kinetic energy recovery system (KERS) is a technology used in various applications, typically to recover and store kinetic energy that is typically wasted during braking or deceleration. As will be evident from the below description, the KERS may be arranged in different forms such as an electrical KERS, a mechanical KERS, or a hydraulic KERS.

Optionally in some examples, including in at least one preferred example, the processing circuitry is further configured to control the kinetic energy recovery system to generate a level of power in response to a level of the temperature parameter when the temperature parameter falls below the predetermined range. A technical benefit may include that a suitable level of power can be generated by the KERS, which will affect the overall fuel consumption of the internal combustion engine in a positive manner.

Optionally in some examples, including in at least one preferred example, the level of power generated by the kinetic energy recovery system is proportional to a difference between the temperature parameter and a lower limit of the predetermined range. A technical benefit may be that the KERS will not generate too much power, but rather a sufficient level for increasing the temperature parameter of the engine aftertreatment system. This may in turn positively affect the overall fuel consumption of the internal combustion engine.

Optionally in some examples, including in at least one preferred example, the processing circuitry is further configured to control the kinetic energy recovery system to apply a level of propulsion torque in response to a level of the temperature parameter when the temperature parameter exceeds the predetermined range. A technical benefit may include that a suitable level of propulsion torque can be applied by the KERS. Hereby, the KERS may not be drained of power, and the KERS will be able to subsequently apply a torque if required without having to regenerate power in between propulsion events. The KERS may thus additionally apply a propulsion torque should an additional boost during, e.g., acceleration of the vehicle be requested.

Optionally in some examples, including in at least one preferred example, the level of propulsion torque is proportional to a difference between the temperature parameter and an upper limit of the predetermined range. A technical benefit may be that a suitable level of propulsion torque is applied to the propeller shaft to reduce the temperature parameter of the engine aftertreatment system.

Optionally in some examples, including in at least one preferred example, the temperature parameter is a temperature level of the engine aftertreatment system.

Optionally in some examples, including in at least one preferred example, the predetermined range is a predetermined temperature range.

Optionally in some examples, including in at least one preferred example, the temperature parameter is a rate of temperature change of the engine aftertreatment system.

Optionally in some examples, including in at least one preferred example, the predetermined range is predetermined temperature rate range.

Optionally in some examples, including in at least one preferred example, the processing circuitry is configured to receive the data indicative of the temperature parameter from a temperature sensor. A technical benefit may be that an instant detection of the current temperature level and/or an instant detection of the rate of temperature change can be obtained.

Optionally in some examples, including in at least one preferred example, the kinetic energy recovery system is an electric energy recovery system comprising an electric traction motor connected to the propeller shaft, the electric traction motor being configured to generate electric power from kinetic energy of the propeller shaft in response to the temperature parameter falling below the predetermined range, and to apply the propulsion torque to the propeller shaft in response to the temperature parameter exceeding the predetermined range.

Optionally in some examples, including in at least one preferred example, the electric energy recovery system comprises an energy storage system configured to receive electric energy from the electric traction motor when the electric traction motor generates electric power, and to feed electric energy to the electric traction motor when the electric traction motor applies the propulsion torque.

Optionally in some examples, including in at least one preferred example, the energy storage system is a supercapacitor. A technical benefit may include that rapid charging of the electric power generated by the electric traction motor is possible. Also, a supercapacitor can allow for frequent cycling of feeding and receiving electric energy to/from the electric traction motor as well as being suitable for short-term energy storage.

Furthermore, a supercapacitor may use an electrostatic mechanism, rather than a chemical mechanism as conventionally used in e.g. batteries. The supercapacitor may store energy in an electric double layer formed at an interface between a porous electrode and an electrolyte. Optionally, the supercapacitor may have two electrodes, typically made of porous carbon materials with a high surface area. These electrodes may allow for a large contact area with the electrolyte. The electrolyte, such as e.g. an ionic liquid or a conductive polymer, separates the two electrodes. It contains ions that move between the electrodes when a voltage is applied. Furthermore, when a voltage is applied across the supercapacitor, ions from the electrolyte are attracted to the electrodes, creating an electric double layer. This electrostatic charge separation stores energy. The supercapacitor may, as also indicated above, charge and discharge rapidly, typically in seconds or even milliseconds, making them suitable for applications requiring e.g. high power bursts.

Moreover, by storing energy through electrostatic charge separation instead of through a chemical reaction, a rapid energy transfer is enabled and an increased cycle lifetime may be provided compared to a battery, i.e. the number of charging and discharging of a supercapacitor may be far more than the number of charging and discharging of a battery. It should however be understood that the KERS may comprise a supercapacitor in combination with a battery.

According to a second aspect, there is provided a vehicle comprising the computer system of any one of the examples described above in relation to the first aspect.

Effects and features of the second aspect are largely analogous to those described above in relation to the first aspect.

According to a third aspect, there is provided a computer-implemented method, comprising determining, by processing circuitry of a computer system, a temperature parameter of an engine aftertreatment system positioned in downstream fluid communication with an internal combustion engine of a vehicle, and in response to the temperature parameter of the engine aftertreatment system falling outside a predetermined range controlling, by the processing circuitry, a kinetic energy recovery system connected to a propeller shaft connected to the internal combustion engine to generate power from kinetic energy of the propeller shaft in response to the temperature parameter falling below the predetermined range; or controlling, by the processing circuitry, the kinetic energy recovery system to apply a propulsion torque to the propeller shaft in response to the temperature parameter exceeding the predetermined range.

Optionally in some examples, including in at least one preferred example, including in at least one preferred example, further comprising controlling, by the processing circuitry, the kinetic energy recovery system to generate a level of power in response to a level of the temperature parameter when the temperature parameter falls below the predetermined range.

Optionally in some examples, including in at least one preferred example, further comprising controlling, by the processing circuitry, the kinetic energy recovery system to apply a level of propulsion torque in response to a level of the temperature parameter when the temperature parameter exceeds the predetermined range.

Optionally in some examples, including in at least one preferred example, the method being preceded by receiving, by the processing circuitry, temperature sensor data indicative of a temperature of the engine aftertreatment system from a temperature sensor.

Further effects and features of the third aspect are largely analogous to those described above in relation to the first aspect.

According to a fourth aspect, there is provided a computer program product comprising program code for performing, when executed by the processing circuitry, the method of any of the examples described above in relation to the third aspect.

According to a fifth aspect, there is provided a non-transitory computer-readable storage medium comprising instructions, which when executed by the processing circuitry, cause the processing circuitry to perform the method of any of the examples described above in relation to the third aspect.

Effects and features of the fourth and fifth aspects are largely analogous to those described above in relation to the first and third aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a driveline system of a vehicle according to an example,
Fig. 3 is an exemplary flow chart of a method according to an example,
Fig. 4 is a further detailed illustration of a driveline system of a vehicle according to an example,
Fig. 5 is a yet further detailed illustration of a driveline system of a vehicle according to an example, and
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is directed to mitigating problems associated with engine aftertreatment systems operating outside a preferred temperature range. A technical effect associated with the below disclosure may be that certain emissions, such as, e.g., NOx gas can be reduced at a desired level, and the risk of, e.g., clogging a diesel particular filter may be reduced.

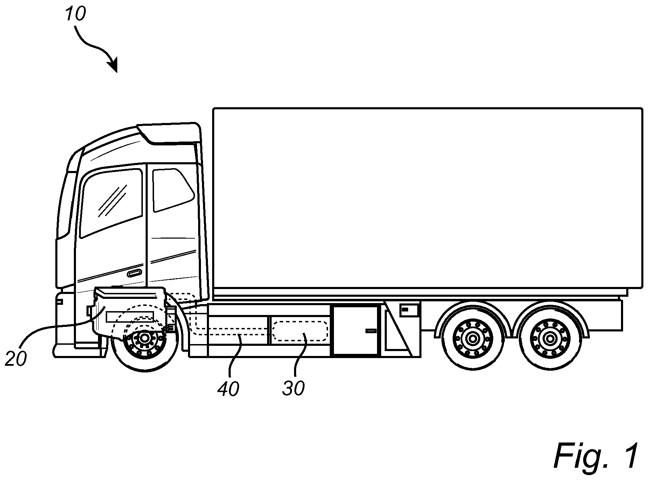

Fig. 1 is an exemplary illustration of a vehicle 10 according to an example. The vehicle 10 is exemplified as a truck. The vehicle 10 comprises an internal combustion engine 20 for propulsion. It should however be readily understood that the vehicle 10 may also be a so-called hybrid vehicle comprising the internal combustion engine 20 in combination with an electric traction motor (not shown). Further, the vehicle 10 also comprises an engine aftertreatment system 30 arranged in downstream fluid communication with the internal combustion engine 20. In further detail, the engine aftertreatment system 30 is connected to the internal combustion engine 20 via an exhaust conduit 40. The exhaust conduit 40 is preferably connected to an exhaust manifold (not shown) of the internal combustion engine 20, whereby exhaust gas, generated during operation of the internal combustion engine, is exhausted through the exhaust conduit 40 and enters into the engine aftertreatment system 30.

The engine aftertreatment system 30 is configured to reduce harmful emissions and pollutants present in the exhaust gas of the internal combustion engine 20 before exhaust gas is released into the environment. Such harmful emissions and pollutants may, for example, be nitrogen oxides (NOx), particulate matter (PM), carbon monoxide (CO), and unburned hydrocarbons (HC). The engine aftertreatment system aims to address these pollutants through various chemical and physical processes which are well known to the skilled person. As an example, the engine aftertreatment system may comprise a diesel oxidation catalyst (DOC) which main purpose is to oxidize carbon monoxide (CO) and unburned hydrocarbons (HC) to carbon dioxide (CO2) and water. The engine aftertreatment system may also comprise a diesel particulate filter (DPF), a selective catalytic reduction (SCR) system, a diesel exhaust fluid (DEF) injection system, an ammonia slip catalyst (ASC), and a catalyzed diesel particulate filter (CDPF). These components may advantageously work together to achieve significant reductions in harmful emissions, thereby improving air quality. The specific configuration of an engine aftertreatment system can however vary between different manufacturers and engine types.

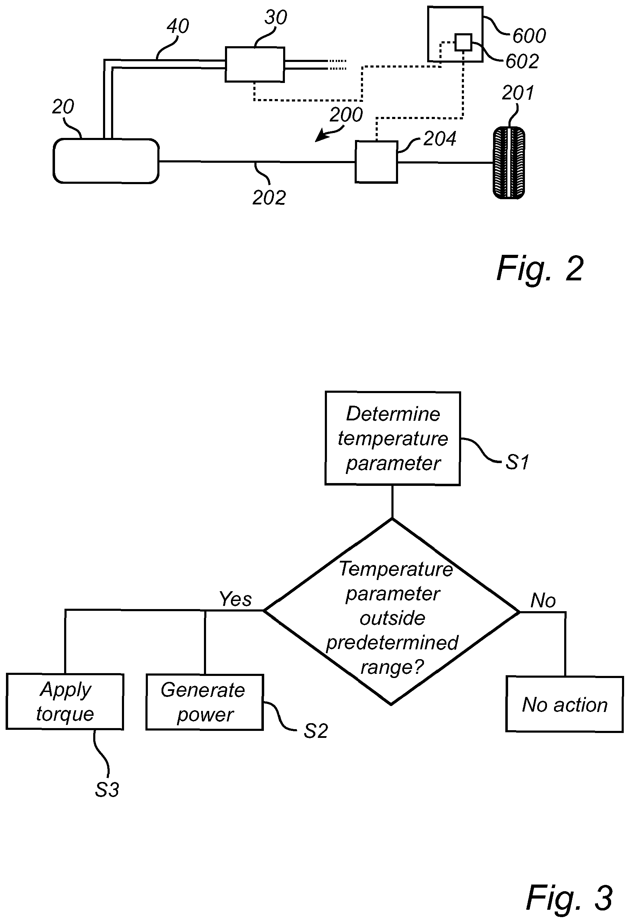

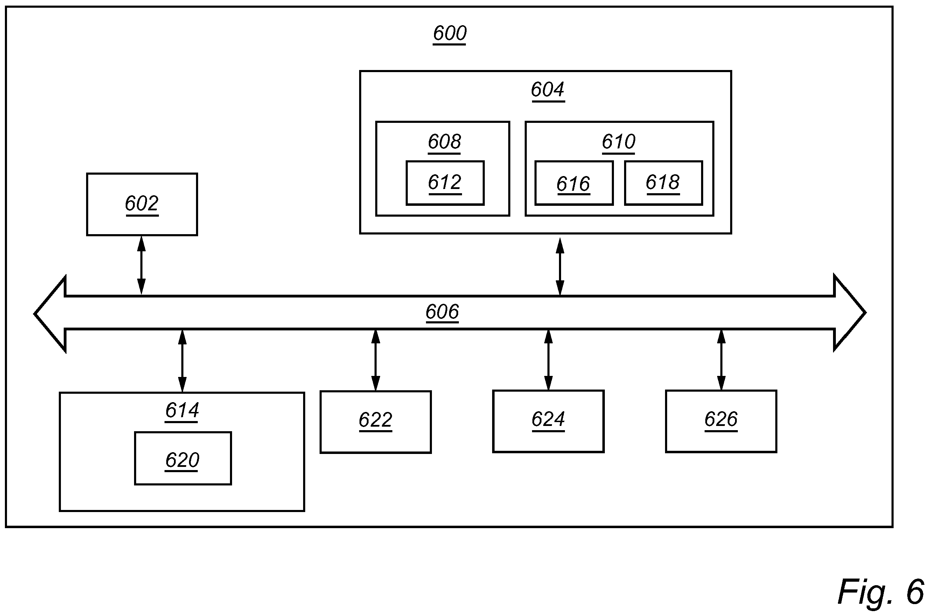

Further, the vehicle 10 also comprises a computer system 600. The computer system 600, which is described in further detail below with reference to Fig. 6, comprises processing circuitry 602 configured to control various operations of the vehicle and the driveline that is described in further detail below with reference to Figs. 2, 4 and 5. As will also be described in further detail below, the vehicle 10 comprises a kinetic energy recovery system, KERS, which is coupled to the propulsion shaft of the driveline.

Turning now to Fig. 2, which is an exemplary illustration of a driveline system 200 of a vehicle according to an example. The driveline system 200 comprises a propeller shaft 202 arranged to transmit torque from the internal combustion engine 20 to at least a pair of wheels 201 of the vehicle 10. The propeller shaft 202 is preferably operatively connected to a crank shaft (not shown) of the internal combustion engine 20. Thus, during operation of the internal combustion engine 20, the crank shaft rotates, whereby the propeller shaft 202 rotates. Since at least one pair of wheels 201 of the vehicle 10 is connected to the propeller shaft 202, the at least one pair of wheels will also rotate by the propulsion torque generated by the internal combustion engine 20.

Further, the driveline system 200 also comprises the above-described KERS 204. The KERS 204 is connected to the propeller shaft 202 at a position between the internal combustion engine 20 and the at least one pair of wheels 201. During operation, the KERS 204 can either generate power from the kinetic energy of the propeller shaft, or apply a torque to the propeller shaft. Hence, when the KERS 204 generates power from the kinetic energy of the propeller shaft during propulsion, the KERS 204 acts as an additional inertia whereby the internal combustion engine must apply more torque in order to meet an overall torque request. During braking of the vehicle 10, the KERS 204 can generate power from the kinetic energy of the propeller shaft and assist in reducing the speed of the vehicle. When the KERS 204, on the other hand, applies a torque to the propeller shaft 202, the KERS 204 assists the internal combustion engine 20 to meet the overall torque demand, whereby the internal combustion engine 20 can apply a reduced torque on the propeller shaft to meet the overall torque demand.

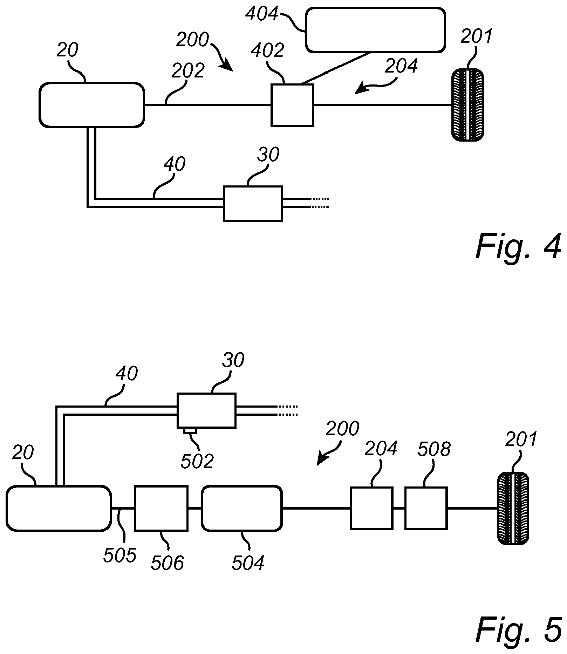

The KERS 204 may be arranged in various configurations of which an electric KERS is exemplified in further detail in Fig. 4 and described in detail below. The KERS 204 may however also be arranged as a mechanical KERS or a hydraulic KERS. With particular reference to a mechanical KERS 202, this type of KERS 204 recovers and stores kinetic energy in a mechanical form, typically using a rotating mass such as, e.g., a flywheel. The flywheel is a rotating disc or cylinder that can store and release kinetic energy. The flywheel is often made of materials with high strength and low weight to maximize energy storage efficiency. The mechanical KERS 204 generates power from the kinetic energy of the propeller shaft by engaging with the propeller shaft. The kinetic energy from the propeller shaft 202 is transferred to, and stored by, the rotating flywheel. The relatively high speed rotation of the flywheel mass thus represents stored mechanical energy. The stored mechanical energy can later be transferred to the propeller shaft 202, thus causing the KERS 204 to apply a torque on the propeller shaft 202. A clutch may be provided to connect and disconnect the mechanical KERS to/from propeller shaft 202.

As described above in relation to the description of Fig. 1, the engine aftertreatment system 30 is arranged in fluid communication with the internal combustion engine 20 via the exhaust conduit 40. The temperature of the exhaust gas from the internal combustion engine 20 is dependent at least on the propulsion torque generated by the internal combustion engine 20. In order to describe operation of the driveline 200 to control the temperature of the engine aftertreatment system 30, reference is made to Fig. 2 in combination with Fig. 3, which is an exemplary flow chart of a method according to an example. The following will describe a temperature parameter of the engine aftertreatment system 30 in the form of a temperature level, but the following disclosure is equally applicable for a temperature parameter in the form of a rate of temperature change, i.e., how fast the temperature is increasing or decreasing.

During operation of the vehicle 10, the temperature level of the engine aftertreatment system 30 is determined S1. In detail, the processing circuitry 602 receives data indicative of the temperature level of the engine aftertreatment system 30. As is exemplified in Fig. 5 and described below, the processing circuitry 602 may receive the data indicative of the temperature level from a temperature sensor which may, for example, be connected to the engine aftertreatment system 30, or arranged in the vicinity of the engine aftertreatment system 30.

Thereafter, it is determined whether the temperature level of the engine aftertreatment system falls outside a predetermined range. The predetermined range, which is preferably a predetermined temperature range may be set different depending on the specific engine aftertreatment system 30. However, as a non-limiting example, the predetermined temperature range may be between 300°C and 550°C. When the temperature level is within the range, no action is taken S4 for the purpose of controlling the temperature level of the engine aftertreatment system 30.

However, in response to the temperature level of the engine aftertreatment system 30 falling below the predetermined range, i.e., the engine aftertreatment system 30 is too cold to operate in a desired manner, the KERS 204 is controlled S2 to generate power from the kinetic energy of the propeller shaft 202. Hereby, for the internal combustion engine 20 to meet an overall torque request, the torque of the internal combustion engine 20 must be increased since the KERS 204, when generating power, acts as an inertia. The increased torque from the internal combustion engine 20 will generate exhaust gas with an increased temperature level, thereby increasing the temperature level of the engine aftertreatment system 30.

The processing circuitry 602 may, in response to the temperature parameter falling below the predetermined range, control a level of power generated by the KERS 204 in response to the temperature level. As an example, the level of power generated by the KERS 204 may be proportional to a difference between the temperature level and a lower limit of the predetermined range. In detail, and as a non-limiting example, if the temperature level is five degrees below the lower limit, the KERS 204 may be controlled to generate a power level of e.g. 6 units of power. If the temperature level is ten degrees below the lower limit, the KERS 204 may in such example be controlled to generate a power level of e.g. 12 units of power.

On the other hand, in response to the response to the temperature level exceeding the predetermined range, i.e. the engine aftertreatment system 30 is too warm, the KERS 204 is controlled S3 to apply a propulsion torque to the propeller shaft 202. Hereby, the internal combustion engine 20 can apply a reduced torque while still meeting the overall torque demand, since the KERS 204 will be arranged as a torque assist. The reduced torque from the internal combustion engine 20 will generate exhaust gas with a reduced temperature level, thereby reducing the temperature level of the engine aftertreatment system 30.

In a similar vein as the above description, the processing circuitry 602 may, in response to the temperature parameter exceeding the predetermined range, control a level of propulsion torque by the KERS 204 in response to the temperature level. As an example, the level of propulsion torque applied by the KERS 204 may be proportional to a difference between the temperature level and an upper limit of the predetermined range. In detail, and as a non-limiting example, if the temperature level is five degrees above the upper limit, the KERS 204 may be controlled to apply a torque of, e.g., 6 units of propulsion torque. If the temperature level is ten degrees above the upper limit, the KERS 204 may in such example be controlled to apply a torque of, e.g., 12 units of propulsion torque.

By controlling the KERS 204 as described above, the temperature level of the engine aftertreatment system 30 may subsequently fall within the predetermined range. The processing circuitry 602 preferably continuously monitors the temperature level of the engine aftertreatment system 30. When the temperature level falls within the predetermined range, the processing circuitry 602 ends the control of operation of the KERS 204, at least for the purpose of controlling the temperature level.

Reference is now made to Fig. 4 which is a further detailed illustration of a driveline system 200 of the vehicle 10 according to an example. The computer system 600 and processing circuitry 602 described above is omitted from the illustration in Fig. 4 but should be construed as operatively connected to the aftertreatment system 30 and the KERS 204 also for this example.

The exemplification of Fig. 4 comprises the KERS 204 but here in the form of an electric KERS 204. The electric KERS 204 comprises an electric traction motor 402 connected to the propeller shaft 202. The electric traction motor 402 is thus configured to apply a torque on the propeller shaft or to generate electric power from the kinetic energy of the propeller shaft 202. Hence, the electric traction motor 402 can be controlled as an electric motor as well as an electric generator. Further, the electric KERS 204 comprises an energy storage system 404 coupled to the electric traction motor 402. The energy storage system 404 is configured to receive electric power generated by the electric traction motor 402 from the kinetic energy of the propeller shaft 202. The energy storage system 404 is also configured to feed electric power to the electric traction motor 402 when the electric traction motor applies a propulsion torque to the propeller shaft 202. According to an example, the energy storage system 404 may be a supercapacitor.

Reference is now made to Fig. 5 which is a yet further detailed illustration of a driveline system 200 of the vehicle according to an example. The computer system 600 and processing circuitry 602 described above is omitted from the illustration in Fig. 5 but should be construed as operatively connected to the aftertreatment system 30 and the KERS 204 also for this example. In Fig. 5, a temperature sensor 502 is connected to the engine aftertreatment system 30. The processing circuitry 602 described above is thus preferably coupled to the temperature sensor 502 and receives temperature data therefrom.

The driveline system 200 of Fig. 5 further comprises gearbox 504 connected between the propeller shaft 202 and a crankshaft 505 of the internal combustion engine 20. Also, the driveline system 200 comprises a clutch 506 between the internal combustion engine 20 and the gearbox 504. The KERS 204 described above in relation to Figs. 2 - 4 is arranged downstream the gearbox 504. Also, an additional clutch 508 may be arranged between the KERS 204 and the wheels 201. Alternative configurations are however conceivable, such as by removing the clutch 506 between the internal combustion engine 20 and the gearbox 504.

Fig. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to: receive data indicative of a temperature parameter of an engine aftertreatment system positioned in downstream fluid communication with an internal combustion engine of a vehicle, and in response to the temperature parameter of the engine aftertreatment system falling outside a predetermined range: control a kinetic energy recovery system connected to a propeller shaft connected to the internal combustion engine to generate power from kinetic energy of the propeller shaft in response to the temperature parameter exceeding the predetermined range; or control the kinetic energy recovery system to apply a propulsion torque to the propeller shaft in response to the temperature parameter falling below the predetermined range.

Example 2. The computer system of example 1, wherein the processing circuitry is further configured to control the kinetic energy recovery system to generate a level of power in response to a level of the temperature parameter when the temperature parameter exceeding the predetermined range.

Example 3. The computer system of example 2, wherein the level of power generated by the kinetic energy recovery system is proportional to a difference between the temperature parameter and an upper limit of the predetermined range.

Example 4. The computer system of any one of the preceding examples, wherein the processing circuitry is further configured to control the kinetic energy recovery system to apply a level of propulsion torque in response to a level of the temperature parameter when the temperature parameter falls below the predetermined range.

Example 5. The computer system of example 4, wherein the level of propulsion torque is proportional to a difference between the temperature parameter and a lower limit of the predetermined range.

Example 6. The computer system of any one of the preceding examples, wherein the temperature parameter is a temperature level of the engine aftertreatment system.

Example 7. The computer system of example 6, wherein the predetermined range is a predetermined temperature range.

Example 8. The computer system of any one of the preceding examples, wherein the temperature parameter is a rate of temperature change of the engine aftertreatment system.

Example 9. The computer system of example 8, wherein the predetermined range is predetermined temperature rate range.

Example 10. The computer system of any one of the preceding examples, wherein the processing circuitry is configured to receive the data indicative of the temperature parameter from a temperature sensor.

Example 11. The computer system of any one of the preceding examples, wherein the kinetic energy recovery system is an electric energy recovery system comprising an electric traction motor connected to the propeller shaft, the electric traction motor being configured to generate electric power from kinetic energy of the propeller shaft in response to the temperature parameter exceeding the predetermined range, and to apply the propulsion torque to the propeller shaft in response to the temperature parameter falling below the predetermined range.

Example 12. The computer system of example 11, wherein the electric energy recovery system comprises an energy storage system configured to receive electric energy from the electric traction motor when the electric traction motor generates electric power, and to feed electric energy to the electric traction motor when the electric traction motor applies the propulsion torque.

Example 13. The computer system of example 12, wherein the energy storage system is a supercapacitor.

Example 14. A vehicle comprising the computer system of any one of the preceding examples.

Example 15. A computer-implemented method, comprising: determining, by processing circuitry of a computer system, a temperature parameter of an engine aftertreatment system positioned in downstream fluid communication with an internal combustion engine of a vehicle, and in response to the temperature parameter of the engine aftertreatment system falling outside a predetermined range: controlling, by the processing circuitry, a kinetic energy recovery system connected to a propeller shaft connected to the internal combustion engine to generate power from kinetic energy of the propeller shaft in response to the temperature parameter exceeding the predetermined range; or controlling, by the processing circuitry, the kinetic energy recovery system to apply a propulsion torque to the propeller shaft in response to the temperature parameter falling below the predetermined range.

Example 16. The computer-implemented method of example 15, further comprising: controlling, by the processing circuitry, the kinetic energy recovery system to generate a level of power in response to a level of the temperature parameter when the temperature parameter exceeding the predetermined range.

Example 17. The computer-implemented method of any one of examples 15 or 16, further comprising: controlling, by the processing circuitry, the kinetic energy recovery system to apply a level of propulsion torque in response to a level of the temperature parameter when the temperature parameter falls below the predetermined range.

Example 18. The computer-implemented method of any one of examples 15 - 17, the method being preceded by: receiving, by the processing circuitry, temperature sensor data indicative of a temperature of the engine aftertreatment system from a temperature sensor.

Example 19. A computer program product comprising program code for performing, when executed by the processing circuitry, the method of any of examples 15-18. Example 20. A non-transitory computer-readable storage medium comprising instructions, which when executed by the processing circuitry, cause the processing circuitry to perform the method of any of examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
- receive data indicative of a temperature parameter of an engine aftertreatment system positioned in downstream fluid communication with an internal combustion engine of a vehicle, and
in response to the temperature parameter of the engine aftertreatment system falling outside a predetermined range:
- control a kinetic energy recovery system connected to a propeller shaft connected to the internal combustion engine to generate power from kinetic energy of the propeller shaft in response to the temperature parameter falling below the predetermined range; or
- control the kinetic energy recovery system to apply a propulsion torque to the propeller shaft in response to the temperature parameter exceeding the predetermined range.

2. The computer system of claim 1, wherein the processing circuitry is further configured to control the kinetic energy recovery system to generate a level of power in response to a level of the temperature parameter when the temperature parameter falls below the predetermined range.

3. The computer system of claim 2, wherein the level of power generated by the kinetic energy recovery system is proportional to a difference between the temperature parameter and a lower limit of the predetermined range.

4. The computer system of any one of the preceding claims, wherein the processing circuitry is further configured to control the kinetic energy recovery system to apply a level of propulsion torque in response to a level of the temperature parameter when the temperature parameter exceeds the predetermined range, wherein the level of propulsion torque is proportional to a difference between the temperature parameter and an upper limit of the predetermined range.

5. The computer system of any one of the preceding claims, wherein the temperature parameter is a temperature level of the engine aftertreatment system, wherein the predetermined range is a predetermined temperature range.

6. The computer system of any one of the preceding claims, wherein the temperature parameter is a rate of temperature change of the engine aftertreatment system, wherein the predetermined range is predetermined temperature rate range.

7. The computer system of any one of the preceding claims, wherein the processing circuitry is configured to receive the data indicative of the temperature parameter from a temperature sensor.

8. The computer system of any one of the preceding claims, wherein the kinetic energy recovery system is an electric energy recovery system comprising an electric traction motor connected to the propeller shaft, the electric traction motor being configured to generate electric power from kinetic energy of the propeller shaft in response to the temperature parameter falling below the predetermined range, and to apply the propulsion torque to the propeller shaft in response to the temperature parameter exceeding the predetermined range.

9. The computer system of claim 8, wherein the electric energy recovery system comprises an energy storage system configured to receive electric energy from the electric traction motor when the electric traction motor generates electric power, and to feed electric energy to the electric traction motor when the electric traction motor applies the propulsion torque.

10. A vehicle comprising the computer system of any one of the preceding claims.

11. A computer-implemented method, comprising:
- determining (S1), by processing circuitry of a computer system, a temperature parameter of an engine aftertreatment system positioned in downstream fluid communication with an internal combustion engine of a vehicle, and in response to the temperature parameter of the engine aftertreatment system falling outside a predetermined range:
- controlling (S2), by the processing circuitry, a kinetic energy recovery system connected to a propeller shaft connected to the internal combustion engine to generate power from kinetic energy of the propeller shaft in response to the temperature parameter falling below the predetermined range; or
- controlling (S3), by the processing circuitry, the kinetic energy recovery system to apply a propulsion torque to the propeller shaft in response to the temperature parameter exceeding the predetermined range.

12. The computer-implemented method of claim 11, further comprising:
- controlling, by the processing circuitry, the kinetic energy recovery system to generate a level of power in response to a level of the temperature parameter when the temperature parameter falls below the predetermined range.

13. The computer-implemented method of any one of claims 11 or 12, further comprising:
- controlling, by the processing circuitry, the kinetic energy recovery system to apply a level of propulsion torque in response to a level of the temperature parameter when the temperature parameter exceeds the predetermined range.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
